# EUROPÄISCHE PATENTSCHRIFT

(11) **EP 1 745 961 B1**
(45) Veröffentlichungstag und Bekanntmachung des Hinweises auf die Patenterteilung: **09.09.2009**
(21) Anmeldenummer: 06013203.2
(22) Anmeldetag: 27.06.2006
(51) Int. Cl.: B60J 7/14

(54) **Klappverdeck für ein Kraftfahrzeug, das ein Heckteil mit einer Heckscheibe und wenigstens ein Dachteil aufweist**
Foldable roof for a vehicle comprising a rear part with a rear window and at least a roof part
Toit escamotable pour véhicule comprenant une partie arrière avec une vitre arrière et au moins une partie de toit

(30) Priorität: 20.07.2005 DE 102005033811
(43) Veröffentlichungstag der Anmeldung: 24.01.2007
(73) Patentinhaber: Bayerische Motoren Werke Aktiengesellschaft, 80809 München (DE)
(72) Erfinder: Minatti, Johann, 80935 München (DE)

(56) Entgegenhaltungen:
- EP-A1- 0 835 780
- EP-A2- 1 068 972
- DE-C1- 4 326 255
- US-A1- 2004 124 660

## Beschreibung

Die Erfindung betrifft ein Klappverdeck für ein Kraftfahrzeug, das ein Heckteil mit einer Heckscheibe und wenigstens ein Dachteil aufweist, mit den im Oberbegriff des Patentanspruches 1 angegebenen Merkmalen.

Ein derartiges Klappverdeck für ein Kraftfahrzeug weist in der EP-A2-1 068 972 ein Heckteil und ein vorderes Dachteil auf, die um eine reelle Schwenkachse schwenkbar miteinander verbunden sind. Das Heckteil und das Dachteil, die in ihrer Schließlage jeweils nach oben konvex gekrümmt sind, können nur entgegen gesetzt gekrümmt - und damit nicht platzsparend - in den von einer Heckklappe verschließbaren Kofferraum eingebracht werden. Um einen Beladespalt zu bilden, ist die gegenüber dem Heckteil schwenkbare Heckscheibe beim Einbringen des Klappverdecks in den hinteren Aufnahmeraum hinten nach oben zu verstellen. Da die im Aufnahmeraum befindliche Heckscheibe zum Dachteil entgegen gesetzt nach unten konvex gekrümmt ist, kann die Heckscheibe bei der Bildung des Beladespalts nur gering hinten nach oben geschwenkt werden, so dass der Beladespalt ein Be- und Entladen des Gepäckraumes entsprechend wenig erleichtert. Bei geöffnetem Klappverdeck ist der Gepäckraum bzw. Restgepäckraum von dem Klappverdeck erheblich eingeschränkt, so dass in den Gepäckraum nur wenige oder entsprechend kleine Gegenstände einzubringen sind. Die Heckklappe, die als einziges schwenkbares Heckteil einerseits den zur Aufnahme des Klappverdecks vorgesehenen Aufnahmeraum und andererseits im Gepäckraum angeordnete Gepäckstücke überdeckt, öffnet immer den Gepäckraum, wenn die Heckklappe vor dem Einbringen des Klappverdecks in den Aufnahmeraum oder vor dem Schließen des geöffneten Klappverdecks aus dem Verstellbereich des Klappverdecks in eine Öffnungslage verschwenkt. Bei ungünstigen Witterungsverhältnissen können dabei die Gepäckstücke nass und/oder verschmutzt werden.

Bei der EP-A1-0 835 780 ist vor dem Öffnen des an einem Kraftfahrzeug vorgesehenen Klappverdecks die Heckscheibe separat bis zum Boden des zur Aufnahme des geöffneten Klappverdecks vorgesehenen hinteren Aufnahmeraumes abzusenken. Danach werden die Dachteile über der Heckscheibe zusammen gefaltet in den Aufnahmeraum eingebracht. Die Dachteile und die Heckscheibe sind im Aufnahmeraum mit gleichsinniger konvexer Krümmung nach oben angeordnet. Das im Aufnahmeraum zusammen gefaltete Klappverdeck erstreckt sich vom Boden des Aufnahmeraumes bis zur Höhe des dahinter angeordneten Kofferraumdeckels. Das hintere Heckteil des Klappverdecks überdeckt die anderen Teile des Klappverdecks und die Heckscheibe, wodurch ein das zusammen gefaltete Klappverdeck überdeckender Verdeckkastendeckel nicht erforderlich ist. Im seitlich mittleren Bereich des im Aufnahmeraum zusammen gefalteten Klappverdecks können keine Gepäckstücke angeordnet werden, die lediglich in den dahinter verbleibenden Restgepäckraum einzubringen sind.

Der Erfindung liegt die Aufgabe zu Grunde, ein Klappverdeck für ein Kraftfahrzeug mit den Merkmalen im Oberbegriff des Patentanspruches 1 anzugeben, das noch kompakter im Aufnahmefach unterzubringen ist.

Diese Aufgabe ist durch die im Patentanspruch 1 angegebenen Merkmale gelöst. Vorteilhafte Ausgestaltungen der Erfindung sind Gegenstand der Unteransprüche.

Durch das motorische Verstellen des vorderen oberen Randbereiches der vor eine Hecköffnung im Heckteil befindlichen Heckscheibe nach vorne unten kann die Heckscheibe in eine günstigere, beispielsweise an eine horizontale Ebene angenäherte Aufbewahrungslage verstellt werden. In ihrer Aufbewahrungslage, kann die beispielsweise nach oben konvex gekrümmte Heckscheibe an die Krümmung des mittleren Bereiches des Heckteiles oder des Dachteiles oder an einen das Aufnahmefach überdeckenden Verdeckkastendeckel derart angepasst sein, dass sich das Klappverdeck platzsparender im Aufnahmefach unterbringen lässt. Ist an dem Verdeckkastendeckel eine Wasserrinne befestigt, die bei geschlossenem Klappverdeck von der Heckscheibe ablaufendes Wasser sammelt und ableitet, kann die wasserführende Mulde der Wasserrinne nach unten in das Aufnahmefach ragen, ohne dass eine Erhöhung des Heckbereiches des Kraftfahrzeugs erforderlich ist, wenn die wasserführende Mulde über dem vorderen Bereich der vorne nach unten verstellten Heckscheibe angeordnet ist. Bei geschlossenem Klappverdeck kann durch ein motorisches Verstellen des vorderen oberen Bereiches der Heckscheibe nach vorne unten eine Be- und/oder Entlüftungsöffnung in der Hecköffnung des Heckteiles gebildet werden.

Ein Ausführungsbeispiel der Erfindung wird anhand einer Zeichnung näher erläutert.
Es zeigen
- Fig. 1: einen vertikalen Fahrzeuglängsschnitt durch einen vereinfacht dargestellten Heckbereich eines Kraftfahrzeugs mit Klappverdeck,
- Fig. 2: eine vereinfachte Seitenansicht des geschlossenen Klappverdecks,
- Fig. 3: eine Fig. 2 entsprechende Ansicht bei nach vorne unten verstellter Heckscheibe,
- Fig. 4: eine Zwischenlage des teilweise über das geschlossene Dachteil angehobenen Heckteiles,
- Fig. 5: eine Fig. 4 entsprechende Ansicht bei nach hinten oben geöffnetem Verdeckkastendeckel,
- Fig. 6: eine Fig. 5 entsprechende Ansicht bei vollständig über das geschlossene Dachteil angehobenem Heckteil,
- Fig. 7: das in einer Zwischenposition teilweise geöffnete Klappverdeck,
- Fig. 8: das bei geöffnetem Verdeckkastendeckel vollständig in das Aufnahmefach eingebrachte Klappverdeck und
- Fig. 9: eine Fig. 8 entsprechende Ansicht bei geschlossenem Verdeckkastendeckel.

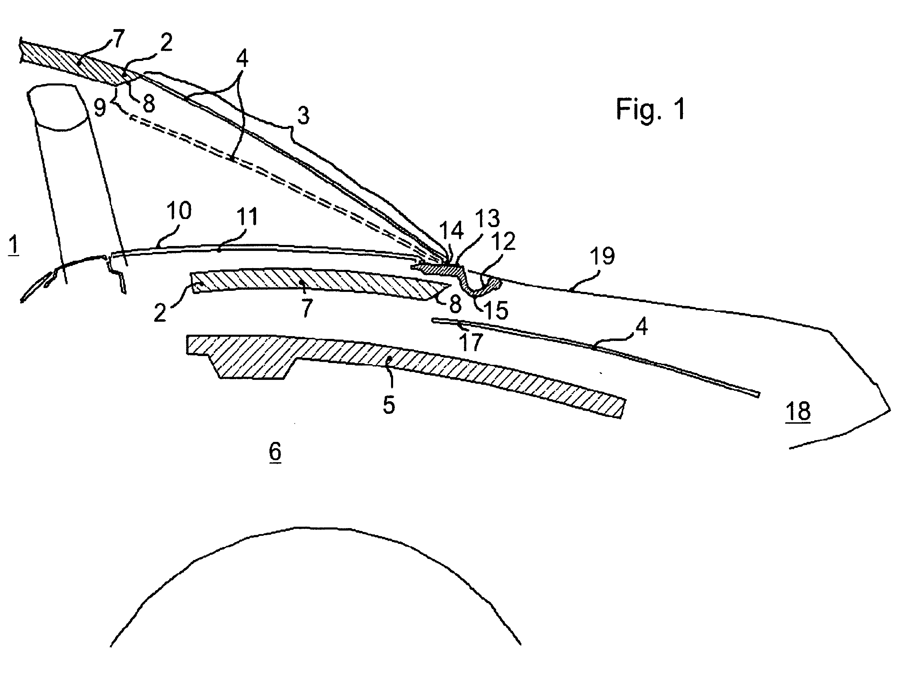

Das in Fig. 1 in einem vertikalen Fahrzeuglängsschnitt durch den Heckbereich eines Kraftfahrzeugs vereinfacht dargestellte Klappverdeck befindet sich in seiner den Fahrgastraum 1 des Kraftfahrzeugs überdeckenden Schließlage. Das Klappverdeck weist ein Heckteil 2 mit einer hinteren Hecköffnung 3 auf, die von einer Heckscheibe 4 verschließbar ist. Außerdem weist das Klappverdeck ein Dachteil 5 auf, das in der Schließlage des Klappverdecks vor dem Heckteil 2 angeordnet und mit dem oberen Windlauf über der vorderen Windschutzscheibe des Kraftfahrzeugs verriegelbar ist.

Nach dem Lösen der Verriegelung am Windlauf kann das Klappverdeck in ein hinteres Aufnahmefach 6 des Kraftfahrzeugs eingebracht werden, wobei dann der seitlich mittlere Dachbereich 7 des Heckteiles 2 über dem vorderen Bereich des Heckteiles 2 angeordnet ist.

Eine nicht dargestellte motorische Verstelleinrichtung verstellt vor dem oder beim Öffnen des geschlossenen Klappverdecks den vorderen oberen Randbereich der die Hecköffnung 3 verschließenden Heckscheibe 4 von der durch eine ausgezogene Umrisslinie dargestellten Schließlage in die durch eine unterbrochene Umrisslinie dargestellte Offenlage, in der zwischen dem vorderen oberen Randbereich der Heckscheibe 4 und dem hinteren Rand 8 des seitlich mittleren Dachbereiches 7 des Heckteiles 2 ein Be- und/oder Entlüftungsspalt 9 gebildet ist.

Das Aufnahmefach 6 ist von einem um eine hintere reelle oder virtuelle ortsfeste oder ortsveränderliche Fahrzeugquerachse schwenkbaren Verdeckkastendeckel 10 verschließbar, der bei zumindest teilweise über das Dachteil 5 beispielsweise in eine Paketlage verstelltem Heckteil 7 nach hinten oben in eine Öffnungslage aus dem Verstellbereich des Klappverdecks schwenkbar ist, damit das Klappverdeck in das Aufnahmefach 3 eingebracht werden kann.

Das Dachteil 5 und der seitlich mittlere Dachbereich 7 des Heckteiles 2 sowie der Verdeckkastendeckel 10 sind bei geschlossenem Klappverdeck und geschlossenem Verdeckkastendeckel 10 jeweils nach oben konvex gekrümmt ausgebildet. Die bei geschlossenem Klappverdeck die Hecköffnung 3 im Heckteil 2 verschließende Heckscheibe 4 ist nach hinten oben konvex gekrümmt. Bei in das Aufnahmefach 6 eingebrachten Klappverdeck sind das Dachteil 5 und der seitlich mittlere Dachbereich 7 des Heckteiles 2 sowie die an ihrem vorderen Bereich von der motorischen Verstelleinrichtung nach unten verstellte Heckscheibe 4 gleichsinnig nach oben konvex gekrümmt und annähernd horizontal angeordnet.

Der geschlossene Verdeckkastendeckel 10 ist in Draufsicht U-förmig mit nach vorne gerichteten Schenkeln ausgebildet. Zwischen den Schenkeln des Verdeckkastendeckels 10 ist eine Hutablage 11 angeordnet, die fest mit dem Verdeckkastendeckel 10 verbunden ist. Die Hutablage könnte auch verstellbar mit dem Verdeckkastendeckel verbunden sein. In der Schließlage des Verdeckkastendeckels 10 überdecken der Verdeckkastendeckel 10 und die Hutablage 11 gemeinsam das Aufnahmefach 6 von oben. Im Übergangsbereich von dem Verdeckkastendeckel 10 zu der Hutablage 11 ist an dem Verdeckkastendeckel 10 eine oben offene Wasserrinne 12 ausgebildet, die bei geschlossenem Verdeckkastendeckel 10 und geschlossenem Klappverdeck sowie geschlossener Heckscheibe 4 von der nach hinten unten geneigten Heckscheibe 4 ablaufendes Wasser sammelt und abgeleitet. Der vordere Rand der Wasserrinne 12 bildet eine Stütz- und/oder Dichtfläche 13, an der bei geschlossenem Verdeckkastendeckel 10 und geschlossenem Klappverdeck die geschlossene oder mit ihrem vorderen oberen Randbereich nach vorne unten verstellte Heckscheibe 4 mit ihrem hinteren unteren Randbereich oder mit einer daran befestigten Dichtung 14 abdichtend anliegt.

Wie der Figur zu entnehmen ist, ragt die wasserführende Mulde der Wasserrinne nach unten in das Aufnahmefach hervor. Dies erfordert jedoch keine Erhöhung des Heckbereiches des Kraftfahrzeugs, da die wasserführende Mulde 15 der Wasserrinne 12 über dem vorderen freien Bereich der vorne nach unten verstellten und in das Aufnahmefach 6 eingebrachten Heckscheibe 4 angeordnet ist. Außerdem ist bei in das Aufnahmefach 6 eingebrachtem Klappverdeck und geschlossenem Verdeckkastendeckel 10 der hintere Rand 8 des seitlich mittleren Dachbereiches 7 des Heckteiles 2 vor oder genauer unmittelbar vor der wasserführenden Mulde 15 der Wasserrinne 12 angeordnet. Bei in das Aufnahmefach 6 eingebrachtem Klappverdeck und geschlossenem Verdeckkastendeckel 10 weist der vordere Randbereich 17 der Heckscheibe 4 einen geringen vertikalen Abstand von der Unterseite der darüber befindlichen Wasserrinne 12 auf.

An den hinteren Bereich des Aufnahmefaches 6 schließt sich ein hinterer Gepäckraum 18 an, der von einem verstellbaren Gepäckraumdeckel 19 verschließbar ist, der um eine vordere reelle oder virtuelle ortsfeste oder ortsveränderliche, zur Fahrzeugquerachse parallele Querachse nach vorne oben in eine Gepäckraum-Öffnungslage verstellbar ist, in der Gegenstände in den Gepäckraum 18 einzubringen oder dem Gepäckraum 18 zu entnehmen sind.

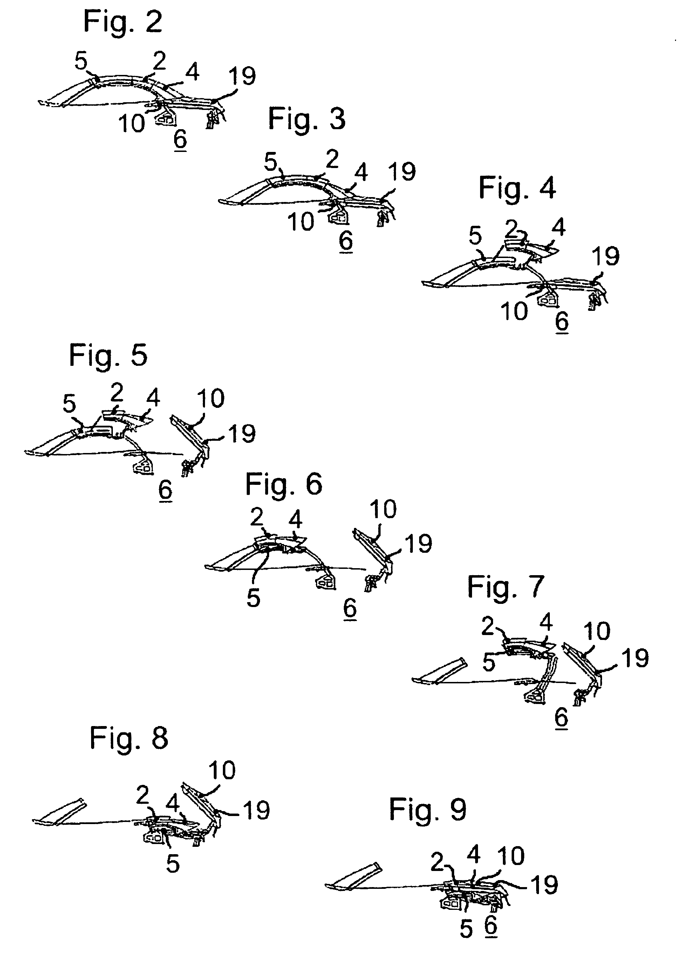

Das Öffnen und Einbringen des Klappverdecks in das Aufnahmefach wird anhand der Figuren 2 bis 9 kurz beschrieben.

Ausgehend von der in Figur 2 dargestellten Schließlage des Klappverdecks wird zunächst gemäß Fig. 3 der vordere obere Randbereich der Heckscheibe 4 von der nicht dargestellten motorischen Verstelleinrichtung zumindest etwas nach vorne unten verstellt. Danach wird - wie in Figur 4 dargestellt - das Heckteil 2 zumindest teilweise über das in Schließlage befindliche Dachteil 5 in eine Zwischenlage verstellt, in der sich der Verdeckkastendeckel 10 wie in Figur 5 abgebildet nach hinten oben in eine Offenlage aus dem Verstellbereich des Klappverdecks verstellen lässt. Befindet sich das Heckteil 2 in der Zwischenlage nicht über dem Dachteil 5, so kann das Heckteil 2 nachfolgend wie in Figur 6 dargestellt über das Dachteil 5 verstellt werden.

Ebenso könnte nach dem Entriegeln des Dachteiles vom oberen Windlauf über der vorderen Windschutzscheibe das Dachteil unter den seitlich mittleren Dachbereich des in der Zwischenlage befindlichen Heckteiles verstellt werden.

Das vom Windlauf entriegelte Dachteil 5 kann dann zusammen mit dem Heckteil 2 weiter nach hinten in die in Figur 7 dargestellte Lage verstellt und darüber hinaus wie in Fig. 8 abgebildet in das Aufnahmefach 6 eingebracht werden. Danach kann der Verdeckkastendeckel 10 wie in Fig. 9 dargestellt in seine das Aufnahmefach überdeckende Schließlage eingeschwenkt werden. Das Kraftfahrzeug kann nun zur Fahrt mit geöffnetem Klappverdeck genutzt werden. Der Schließvorgang des Klappverdecks erfolgt in einer gegenüber dem Öffnen des Klappverdecks umgekehrten Reihenfolge.

Die vordere reelle oder virtuelle ortsfeste oder ortsveränderliche Querachse kann beispielsweise an dem Verdeckkastendeckel oder an wenigstens einem den Verdeckkastendeckel stützenden Lenker oder Rahmen ausgebildet sein. Bei in das Aufnahmefach eingebrachtem Klappverdeck kann der seitlich mittlere Dachbereich des Heckteiles über oder unter dem Dachteil angeordnet sein. Die Form des Dachteiles, des Heckteiles und der rahmenlosen oder mit einem Rahmen versehenen Heckscheibe kann von einem Fachmann nach seinen Gesichtspunkten vorgegebenen werden. Mit dem Klappverdeck kann der Heckbereich eines Kraftfahrzeugs mit Klappverdeck eine geringe Bauhöhe aufweisen. Das Klappverdeck kann ein Heckteil mit einer Heckscheibe und mehr als ein Dachteil, beispielsweise zwei Dachteile aufweisen, die bei geschlossenem Klappverdeck im wesentlichen hintereinander angeordnet sind. Der vordere obere Randbereich der Heckscheibe kann zu einem beliebigen, beispielsweise günstigen Zeitpunkt aus einer Schließlage, in der die Heckscheibe (4) eine Hecköffnung (3) im Heckteil (2) verschließt, manuell oder über eine motorische Verstelleinrichtung zumindest etwas nach vorne unten verstellt werden.

Dies kann vor dem oder beim oder nach dem Öffnen des geschlossenen Klappverdecks erfolgen ist. Ist das Aufnahmefach von einem Verdeckkastendeckel teilweise oder vollständig von oben verschließbar und würde sich nach dem Einbringen des Klappverdecks in das Aufnahmefach der vordere obere Bereich der die Hecköffnung verschließenden Heckscheibe im Verstellbereich des Verdeckkastendeckels befinden, so ist der vordere obere Bereich der Heckscheibe zumindest vor dem Schließen des Verdeckkastendeckels aus dem Verstellbereich des Verdeckkastendeckels nach vorne unten zu verstellen.

## Patentansprüche

1. Klappverdeck für ein Kraftfahrzeug, das ein Heckteil (2) mit einer Heckscheibe (4) und wenigstens ein Dachteil (5) aufweist, das in der Schließlage des Klappverdecks vor dem Heckteil (2) und bei in ein hinteres Aufnahmefach (6) eingebrachtem Klappverdeck über oder unter dem Heckteil (2) angeordnet ist, und die Heckscheibe (4) mit ihrem vorderen oberen Randbereich aus einer Schließlage, in der die Heckscheibe (4) eine Hecköffnung (3) im Heckteil (2) verschließt, über eine motorische Verstelleinrichtung zumindest etwas nach vorne unten verstellbar ist, mit einem schwenkbaren Verdeckkastendeckel (10), der aus einer ein hinteres Aufnahmefach (6) für das Klappverdeck verschließenden Schließlage aus dem Verstellbereich des Klappverdecks in eine Offenlage schwenkbar ist, **dadurch gekennzeichnet, dass** im hinteren Bereich des Verdeckkastendeckels (10) eine Wasserrinne (12) angeordnet ist, die eine Mulde (15) aufweist, die bei geschlossenem Verdeckkastendeckel (10) nach unten in das Aufnahmefach (6) ragt, und bei in das Aufnahmefach (6) eingebrachtem Klappverdeck und geschlossenem Verdeckkastendeckel (10) der hintere Rand (8) eines seitlich mittleren Dachbereiches (7) des Heckteiles (2) vor oder unmittelbar vor der Mulde (15) der Wasserrinne (12) angeordnet ist und der abgesenkte vordere Randbereich der Heckscheibe (4) mit einem geringen vertikalen Abstand von der Unterseite der darüber befindlichen Mulde (15) der Wasserrinne (12) angeordnet ist.

2. Klappverdeck nach Anspruch 1, **dadurch gekennzeichnet, dass** das Dachteil (5) in der Schließlage des Klappverdecks vor dem Heckteil (2) und bei in das hintere Aufnahmefach (6) eingebrachtem Klappverdeck unter dem seitlich mittleren Dachbereich (7) des Heckteiles (2) angeordnet ist.

3. Klappverdeck nach Anspruch 1 oder 2, **dadurch gekennzeichnet, dass** bei geschlossenem Klappverdeck das Dachteil (5) und der seitlich mittlere Dachbereich (7) des Heckteiles (2) nach oben und die geschlossene Heckscheibe (4) nach hinten oben jeweils konvex gekrümmt sind und bei in das Aufnahmefach (6) eingebrachtem Klappverdeck das Dachteil (5) und der seitlich mittlere Dachbereich (7) des Heckteiles (2) sowie die Heckscheibe (4) gleichsinnig nach oben konvex gekrümmt sind.

4. Klappverdeck nach einem der Ansprüche 1 bis 3, **dadurch gekennzeichnet, dass** bei in das Aufnahmefach (6) eingebrachtem Klappverdeck das Dachteil (5) und der seitlich mittlere Dachbereich (7) des Heckteiles (2) und die mit ihrem vorderen oberen Randbereich von der Hecköffnung (3) des Heckteiles (2) nach vorne unten geschwenkte Heckscheibe (4) etwa horizontal angeordnet sind.

5. Klappverdeck nach einem der Ansprüche 1 bis 4, **dadurch gekennzeichnet, dass** bei über das Dachteil (5) in eine Paketlage verstelltem Heckteil (2) der Verdeckkastendeckel (10) um eine hintere reelle oder virtuelle ortsfeste oder ortsveränderliche Fahrzeugquerachse nach hinten oben in eine Öffnungslage schwenkbar ist, in der das Klappverdeck in das Aufnahmefach (6) einzubringen ist.

6. Klappverdeck nach einem der Ansprüche 1 bis 5, **dadurch gekennzeichnet, dass** sich an den hinteren Bereich des Aufnahmefaches (6) ein hinterer Gepäckraum (18) anschließt, der von einem verstellbaren Gepäckraumdeckel (19) verschließbar ist, der um eine vordere reelle oder virtuelle ortsfeste oder ortsveränderliche, zur Fahrzeugquerachse parallele Querachse nach vorne oben in eine Gepäckraum-Öffnungslage verstellbar ist, in der Gegenstände in den Gepäckraum (18) einzubringen oder dem Gepäckraum (18) zu entnehmen sind.

7. Klappverdeck nach Anspruch 6, **dadurch gekennzeichnet, dass** in der Schließlage des Gepäckraumdeckels (19) ein vorderer Randbereich des Gepäckraumdeckels (19) den hinteren Rand der Wasserrinne (12) überdeckt.

8. Klappverdeck nach einem der Ansprüche 1 bis 7, **dadurch gekennzeichnet, dass** die Wasserrinne (12) oben offen ausgebildet ist und bei geschlossenem Verdeckkastendeckel (10) und geschlossenem Klappverdeck von der Heckscheibe (4) ablaufendes Wasser sammelt und ableitet.

9. Klappverdeck nach einem der Ansprüche 1 bis 8, **dadurch gekennzeichnet, dass** der vordere Rand der Wasserrinne eine Stütz- und/oder Dichtfläche (13) bildet, an der bei geschlossenem Verdeckkastendeckel (10) und geschlossenem Klappverdeck die geschlossene oder mit ihrem vorderen oberen Randbereich nach vorne unten verstellte Heckscheibe (4) mit ihrem hinteren unteren Randbereich oder mit einer daran befestigten Dichtung (14) abdichtend anliegt.

## Claims

1. A folding top for a motor vehicle, which has a rear part (2) with a rear window (4) and at least one roof part (5), which is arranged, in the closed position of the folding top, in front of the rear part (2), and when the folding top is introduced into a rear receiving compartment (6), is arranged above or below the rear part (2), and the rear window (4) with its front upper edge region can be adjusted at least slightly to the bottom front by means of a motor adjusting device, from a closed position, in which the rear window (4) closes the rear opening (3) in the rear part (2), with a pivotable top box lid (10), which can be pivoted from a closed position closing a rear receiving compartment (6) for the folding top, from the adjustment region of the folding top into an open position, **characterised in that** a water channel (12) is arranged in the rear region of the top box lid (10) and has a recess (15), which, when the top box lid (10) is closed, projects downwardly into the receiving compartment (6) and when the folding top is introduced into the receiving compartment (6), and the top box lid (10) is closed, the rear edge (8) of a lateral centre roof region (7) of the rear part (2) is arranged in front of or directly in front of the recess (15) of the water channel (12), and the lowered front edge region of the rear window (4) is arranged with a slight vertical spacing from the lower side of the recess (1 5) arranged thereabove of the water channel (12).

2. A folding top according to claim 1 , **characterised in that** the roof part (5), in the closed position of the folding top, is arranged in front of rear part (2), and when the folding top is introduced into the rear receiving compartment (6), is arranged below the lateral centre roof region (7) of the rear part (2).

3. A folding top according to claim 1 or claim 2, **characterised in that** when the folding top is closed, the roof part (5) and the lateral centre roof region (7) of the rear part (2) are respectively convexly curved upwardly, and the closed rear window (4) is convexly curved to the top rear, and when the folding top is introduced into the receiving compartment (6), the roof part (5) and the lateral centre roof region (7) of the rear part (2) and the rear window (4) are convexly curved upwardly in the same direction.

4. A folding top according to any one of claims 1 to 3, **characterised in that** when the folding top is introduced into the receiving compartment (6), the roof part (5) and the lateral centre roof region (7) of the rear part (2) and the rear window (4) which is pivoted to the bottom front with its front upper edge region of the rear opening (3) of the rear part (2), are arranged approximately horizontally.

5. A folding top according to any one of claims 1 to 4, **characterised in that** when the rear part (2) is adjusted into a package position over the roof part (5), the top box lid (10) can be pivoted to the top rear into an opening position about a rear real or virtual stationary or position-variable transverse vehicle axis, in which the folding top is to be introduced into the receiving compartment (6).

6. A folding top according to any one of claims 1 to 5, **characterised in that** a rear luggage space (18) adjoins the rear region of the receiving compartment (6) and can be closed by an adjustable luggage space lid (19), which can be adjusted to the top front into a luggage space opening position about a front real or virtual stationary or position-variable transverse axis parallel to the transverse axis of the vehicle, in which luggage space opening position items are to be introduced into the luggage space (18) or removed from the luggage space (18).

7. A folding top according to claim 6, **characterised in that,** in the closed position of the luggage space lid (19), a front edge region of the luggage space lid (19) covers the rear edge of the water channel (1 2).

8. A folding top according to any one of claims 1 to 7, **characterised in that** the water channel (12) is open at the top and when the top box lid (10) is closed and the folding top is closed, collects and guides away water running off the rear window (4).

9. A folding top according to any one of claims 1 to 8, **characterised in that** the front edge of the water channel forms a support and/or sealing face (13), on which, when the top box lid (10) is closed and the folding top is closed, the rear window (4), which is closed or adjusted to the bottom front with its front upper edge region, rests, in a sealing manner, with its rear lower edge region or with a seal (14) fastened thereto.

## Revendications

1. Toit pliant de véhicule automobile comportant :
une partie arrière (2) équipée d'une lunette arrière (4) et d'au moins une partie de toit (5) qui, en position de fermeture du toit pliant, se trouve devant la partie arrière (2) et lorsque le toit pliant est logé dans un compartiment de rangement (6), arrière, se trouve au-dessus ou en dessous de la partie de toit (2), et la lunette arrière (4) est déplacée par une installation d'actionnement à moteur, au moins sensiblement vers l'avant et vers le bas, avec sa zone de bord supérieure avant partant d'une position de fermeture dans laquelle la lunette arrière (4) ferme une ouverture arrière (3) de la partie arrière (2),
un couvercle de compartiment de rangement (10), pivotant, qui bascule d'une position de fermeture du compartiment de rangement (6), arrière, du toit pliant à la zone de réglage du toit pliant dans sa position d'ouverture,
**caractérisé en ce que**
dans la zone arrière du couvercle de compartiment de rangement (10), une gouttière (12) comporte une goulotte (15) qui, lorsque le couvercle de compartiment de rangement (10) est fermé, se trouve en saillie vers le bas dans le compartiment de rangement (6), et lorsque le toit pliant est logé dans le compartiment de rangement (6) et que le couvercle de compartiment (10) est fermé, le bord arrière (8) d'une zone médiane latérale de toit (7) de la partie arrière (2) se trouve devant ou directement devant la goulotte (15) de la gouttière (12), et la zone de bord avant, abaissée, de la lunette arrière (4) se trouve à une faible distance verticale de la face inférieure de la goulotte (15) de la gouttière (12) qui se trouve au-dessus.

2. Toit pliant selon la revendication 1,
**caractérisé en ce que**
la partie de toit (5), en position de fermeture du toit pliant, se trouve devant la partie arrière (2), et lorsque le toit pliant est logé dans le compartiment de rangement arrière (6), cette partie de toit se trouve sous la partie médiane latérale du toit (7) de la partie arrière (2).

3. Toit pliant selon la revendication 1 ou 2,
**caractérisé en ce que**
lorsque le toit pliant est fermé, la partie de toit (5) et la zone médiane latérale de toit (7) de la partie arrière (2) sont cintrées de façon convexe vers le haut et la lunette arrière fermée (4), vers l'arrière et le haut, et lorsque le toit pliant est logé dans le compartiment de rangement (6), la partie de toit (5) et la zone moyenne latérale de toit (7) de la partie arrière (2) ainsi que la lunette arrière (4) sont cintrées de façon convexe vers le haut et dans le même sens.

4. Toit pliant selon les revendications 1 à 3,
**caractérisé en ce que**
lorsque le toit pliant est logé dans le compartiment de réception (6), alors la partie de toit (5), la zone moyenne latérale de toit (7) de la partie arrière (2) et la lunette arrière (4) dont la zone de bord supérieure avant de l'ouverture arrière (3) de la partie arrière (2) est basculée vers l'avant et vers le bas, sont sensiblement en position horizontale.

5. Toit pliant selon les revendications 1 à 4,
**caractérisé en ce que**
lorsque la partie arrière (2) est déplacée en position regroupée au-dessus de la partie de toit (5), le couvercle (10) du compartiment de rangement bascule autour d'un axe transversal du véhicule, axe arrière réel ou virtuel, fixe ou variable, en basculant vers l'arrière et vers le haut en position d'ouverture pour laquelle le toit pliant peut se placer dans le compartiment de rangement (6).

6. Toit pliant selon les revendications 1 à 5,
**caractérisé par**
un volume à bagages (18) derrière la zone arrière du compartiment de rangement (6), volume de rangement fermé par un couvercle de coffre à bagages (19), réglable, qui peut être déplacé dans une position d'ouverture vers l'avant et vers le haut autour d'un axe transversal avant, réel ou virtuel, fixe ou variable, parallèle à l'axe transversal du véhicule.

7. Toit pliant selon la revendication 6,
**caractérisé par**
une zone de bord avant du coffre à bagages (19) qui couvre le bord arrière de la gouttière (12) lorsque le coffre à bagages (19) est en position de fermeture.

8. Toit pliant selon les revendications 1 à 7,
**caractérisé en ce que**
la gouttière (12) est ouverte vers le haut et, lorsque le couvercle (10) du compartiment de rangement est fermé et que le toit pliant est fermé, la goulotte collecte et évacue l'eau qui s'écoule sur la lunette arrière (4).

9. Toit pliant selon les revendications 1 à 8,
**caractérisé en ce que**
lorsque le couvercle de compartiment de rangement (10) est fermé ainsi que le toit pliant, le bord avant de la gouttière forme une surface d'appui et/ou d'étanchéité (13), appliquée de manière étanche contre la lunette arrière (4), fermée, ou dont la zone de bord supérieure avant est déplacée vers l'avant et vers le bas, avec sa zone de bord inférieure arrière, ou par un joint (14) fixé à celle-ci.
